# EUROPEAN PATENT SPECIFICATION

(11) **EP 3 617 927 B1**
(45) Date of publication and mention of the grant of the patent: **30.06.2021**
(21) Application number: 18191617.2
(22) Date of filing: 30.08.2018
(51) Int. Cl.: G06F 21/74, G06F 12/14, G06F 12/109, G06F 21/53, G06F 9/455, G06F 9/48, G06F 21/78

(54) **CONTROL UNIT AND METHOD FOR OPERATING A CONTROL UNIT**
STEUEREINHEIT UND VERFAHREN ZUM BETREIBEN EINER STEUEREINHEIT
UNITÉ DE COMMANDE ET PROCÉDÉ POUR FAIRE FONCTIONNER UNE UNITÉ DE COMMANDE

(43) Date of publication of application: 04.03.2020
(73) Proprietor: OpenSynergy GmbH, 10245 Berlin (DE)
(72) Inventor: PETER, Michael, 10961 BERLIN (DE); SÖDING-FREIHERR VON BLOMBERG, Axel, 10999 Berlin (DE)
(74) Representative: Lavoix

(56) References cited:
- EP-A1- 3 101 535
- EP-A1- 3 343 419
- US-A1- 2015 052 325
- US-A1- 2015 127 866
- Richard Wilkins ET AL: "THE CHAIN OF TRUST - Keeping Computing Systems More Secure", , 14 June 2016 (2016-06-14), XP055513099, Retrieved from the Internet: URL:http://www.uefi.org/sites/default/file s/resources/UEFI%20Forum%20White%20Paper%2 0-%20Chain%20of%20Trust%20Introduction_Fin al.pdf [retrieved on 2018-10-08]

## Description

The present invention concerns a control unit comprising a processor and a memory connected to the processor the processor comprising a first state and a second state and being adapted to switch between the first state and the second state, wherein in the first state a non-trusted system is active and in the second state a trusted system is active, wherein the control unit comprises a system monitor controlling the activation of the first state and the second state.

Further, the present invention relates to a method for operating a control unit, wherein the control unit includes a processor and a memory connected to the processor the processor comprising a first state and a second state and being adapted to switch between the first state and the second state, wherein in the first state a non-trusted system is active and in the second state a trusted system is active, wherein the control unit comprises a system monitor controlling the activation of the first state and the second state.

EP 3 343 419 A1 relates to a computer system embedded in a car. The system includes a hardware platform including a processor unit, a hypervisor that runs or operates on the hardware platform, and a secure OS (first OS) and rich OSes (second OSes) that run on a virtualization environment provided by the hypervisor. The processor unit provides a plurality of execution modes (execution environments), namely a secure mode realized by a support function (memory protecting function, memory protecting architecture) that sets a protected region in a memory and prohibits access to the protected region and a low-security mode that has a lower level of protection than the secure mode. In the non-secure mode, access to the protected region of the memory is prohibited by the support function of the processor unit. With the TZ architecture, it is possible to separate a memory space of a normal world and a memory space of a secure world so that the memory space of the secure world cannot be seen or accessed by the normal world (i.e., access is prohibited).

US 2015/052325 A1 relates to an embodied electronic device having a processor, having two operating modes, a normal non-secure operating system mode and a secure mode and an accelerator, for example a GPU, having a normal mode and a protected mode. The processor is connected to a memory. The memory can be configured as protected or non-protected memory regions. The protected memory regions are not readable by the host processor (and thus operating system) when it is operating in a non-secure mode of operation.

EP 3 101 535 A1 relates to the update system of an ECU.

Richard Wilkins ET AL: "THE CHAIN OF TRUST - Keeping Computing Systems More Secure", relates to a chain of trust.

Some processors have a trusted execution environment. A trusted execution environment is a secure area of a processor or a system on chip (SoC). The trusted execution environment provides an execution space that is not generally accessible by a non-trusted execution area of the processor or the SoC. A trusted execution environment could be implemented with a dedicated processor along with dedicated memory or on a single processor with a single memory. An example of processors or SoCs having a trusted execution environment are processors having an ARM architecture designed by ARM Holding, Cambridge, England, United Kingdom. The ARM architecture provides two virtual processors or systems, which are controlled by the hardware. The processor can switch between the two virtual systems, which are also referred to as worlds, namely the trusted world and the non-trusted world. For example a rich operating system is run in the non-trusted system, whereas a smaller security relevant system is run in the trusted system in order to reduce the attack surface.

The trusted execution environment in the ARM architecture is called TrustZone. The normal world or non-trusted world and the trusted world are created upon startup, and the trusted world will host the trusted execution environment. The non-trusted world or the trusted world may be a defined hardware subset of the processor or the SoC. A trusted execution environment monitor ensures that a non-trusted processor can access only non-trusted or secure resources and receive only non-secure interrupts. However, software running within the secure world has complete access to all resources of the SoC hardware or the processor. The software in the trusted execution environment is usually checked for security purpose.

Sometimes, multiple operating systems (OS) are running on the non-trusted system on a hypervisor.

However, the trusted operating systems are usually not developed according to safety standards, in particular according to standards applicable for safety-critical systems. For example standards for the safety domain are different to the standards for the security domain. Safety standards are for example IEC 61508, ISO 26262, ISO 13482, EN5012x, IEC 62061. A combination of both domains, security and safety has not been solved in general.

For example, in the safety domain, decomposition is a commonly applied pattern: a (large) problem is split into multiple smaller problems which can be solved independently; the solutions of all sub-problems can be combined in a way that is feasible to solve the original problem. Functional safety can be managed in a generic way, yielding a safety-component hierarchy.

In the security domain, decomposition seems not to be a suitable design pattern, because the original problem, protection against attacks from the outside, can hardly be decomposed into independent sub-problems. Security is a system property, and a single weakness in one of its sub-components could compromise the entire system. In other words, different objectives are pursued. For a secure system, confidentiality is paramount. It may be acceptable if a system locks up as long as no data is leaked. For a safe system, availability and correct execution (including timing properties) are of interest. Data leakage is not seen as a problem by itself.

From the safety perspective, when combining components of different safety level, freedom from interference is required to retain safety properties. That means, when combining a safety-critical component and an uncritical component to the same context, additional measures must be taken to prevent the uncritical component from disturbing the critical one (see ISO-26262 Part 6, Appendix D).

From the security perspective, separation between external interfaces and protected items is the key argument. Strong self-isolating components are useful building blocks when constructing a secure system architecture. As already stated above, modern ARM processors implement an isolation concept called TrustZone®, which separates the entire processor into 'non-trusted' and 'trusted'; this separation covers all CPU resources, memory and peripheral devices.

Using Trustzone® for security purposes introduces the trusted execution environment (TEE), consisting of trusted firmware as a hardened operating system which provides a secure subsystem hosting various security functions providing key management, crypto functions or similar. The TEE must be developed according to the standards for security. In general, they are not (or have not been) developed following safety standards.

Object of the invention is to provide a control unit and a method, which uses the existing solutions for a trusted execution environment but which is also usable with safety critical applications.

According to an aspect a control unit is provided according to claim 1.

Further embodiments may include the following features in any feasible combination:
- the trusted module includes at least one trusted operating system and at least one application running on the at least one trusted operating system, wherein the safety module being adapted to control, in particular inhibit, access of the at least one trusted operating system and/or the at least one application to predefined areas of the second portion of the memory;
- the predefined area is assigned to a safety qualified modules provided in the non-trusted system;
- the safety module is a safety qualified module
- the processor includes a plurality of privilege levels, wherein each level has from the lowest privilege level to the highest privilege level the same or an increased access to the resources of the control unit, in particular the processor and/or the memory, wherein the at least one trusted operating system being on the same privilege level as the at least one application running on the trusted operating system, wherein in particular the at least one trusted operating system being provided at the lowest privilege level;
- the safety module controls the page table of the trusted system associated to the at least one trusted module;
- the processor includes a plurality of privilege levels, wherein each privilege level has from the lowest privilege level to the highest privilege level an increased access to the processor and/or the memory, wherein the at least one trusted module being on a lower privilege level compared to the safety module;
- the processor includes a generic interrupt controller receiving all interrupts from external sources, wherein, when the trusted system being active, the generic interrupt controller being configured to route all interrupts for the non-trusted system to the trusted system, in particular to the safety module of the trusted system;
- the safety module is adapted to examine whether the received interrupt for the non-trusted system is for a safety qualified module of the non-trusted system, and in case the interrupt is for a safety qualified module of the non-trusted system, the safety module is adapted to program that the interrupt is injected to the non-trusted system and to command to system monitor to switch to the non-trusted system;
- the processor includes a generic interrupt controller receiving all interrupts from external sources, wherein the safety module is adapted periodically check the generic interrupt controller for interrupts addressed to the non-trusted system and retrieve these interrupts in order to examine whether the received interrupt for the non-trusted system is for a safety qualified module of the non-trusted system, and in case the interrupt is for a safety qualified module of the non-trusted system, to program that the interrupt is injected to the non-trusted system and to command to system monitor to switch to the non-trusted system; and/or
- the safety module is adapted to assign hardware resources, in particular processor time and memory space, to the at least one trusted module and/or provides simulated hardware to the at least one trusted module.

According to another aspect a method is provided for operating a control unit according to claim 10.

Further embodiments may include the following features in any feasible combination:
- the processor includes a generic interrupt controller receiving all interrupts from external sources, the method further comprising:
- receiving an interrupt, by the generic interrupt controller, for the non-trusted system;
   providing, when the trusted system is active, the received interrupt for the non-trusted system, to the trusted system, in particular to the safety module;
   examining, by the safety module, whether the received interrupt for the non-trusted system is for a safety qualified module of the non-trusted system;
   programming, in case the interrupt is for a safety qualified module of the non-trusted system, that the interrupt is injected to the non-trusted system; and
   commanding the system monitor to switch to the non-trusted system.

According to a further aspect, a computer program product is provided comprising commands for executing the method according an embodiment disclosed herein, when loaded and executed on a processor. According to an embodiment a computer program product may be a physical software product, for example a hard disc, a solid state disc, a CD-ROM, a DVD, comprising the program.

According to other aspects, the present invention relates to non-volatile memory, for example a hard disc, a solid state disc, a CD-ROM, a DVD, including a program containing commands for executing the method according an embodiment disclosed herein, when loaded and executed on a processor.

So that the manner in which the above recited features of the present invention can be understood in detail, a more particular description of the invention, briefly summarized above, may be read by reference to embodiments. The accompanying drawings relate to embodiments of the invention and are described in the following:
Fig. 1 shows schematically the hardware of an electronic control unit (ECU);
Fig. 2 shows schematically a system according to an embodiment of the invention;
Fig. 3 shows schematically a memory of a control unit;
Fig. 4 shows a flow chart of a method according to an embodiment; and
Fig. 5 shows a flow chart of a method according to another embodiment.

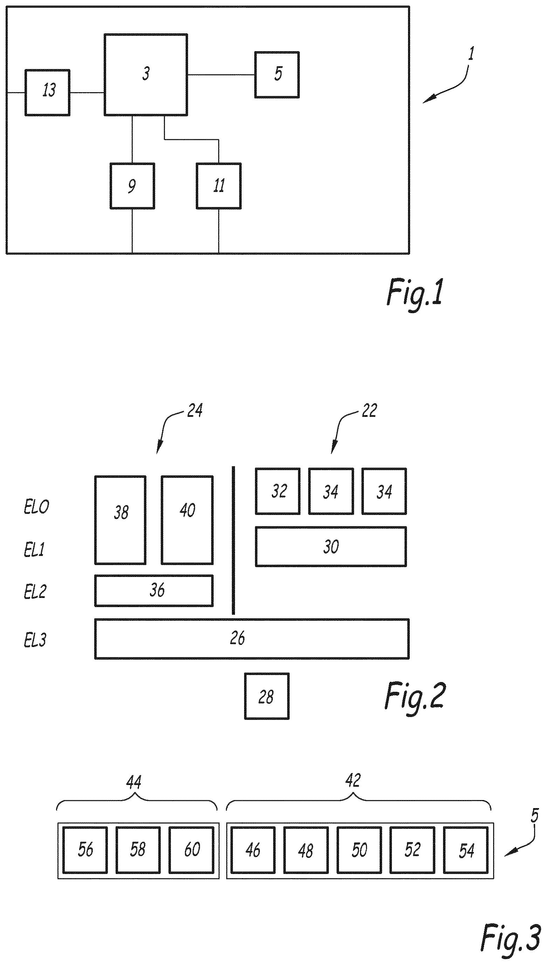

Figure 1 shows schematically an electronic control unit (ECU) 1. The ECU 1 might be also called control unit in the present patent application. For example, the ECU 1 is realized as a system on chip (SoC). According to an embodiment, an ECU comprises one or more processors 3 connected to one or more memories 5. Further, the ECU 1 may comprise interface for connecting to one or more bus systems, for example one or more hardware controller 9 for one or more controller area network (CAN) busses and/or for one or more for FlexRay busses. The ECU may also comprise further hardware controller 11 for connecting to one or more wired or wireless connecting means, for example a Bluetooth connection, an Ethernet connection and/or to a USB (Universal Serial Bus) connecting means.

Usually, an automotive vehicle comprises a plurality of electronic control units (ECU), which may be assigned to different units of the vehicle, for example the steering wheel, the brakes, the windows, the motor etc. For example, the ECU may be connected to some sensors or drivers via an interface 13, for example to drive the window, or to sense the angulation of the steering wheel, the level of oil or water in the motor.

Further, to ECU may be connected to an input device, for example a keyboard, one or more buttons, or the like.

According to an embodiment, the ECU 1 is provided as an embedded system in a vehicle.

The ECU 1 comprises trusted hardware resources and non-trusted hardware resources. The trusted hardware resources and the non-trusted hardware resources are respectively a subset of the hardware resources of the ECU 1. For example, the CAN controller 9 and the interface 13 is be assigned as trusted hardware resources and the controller 11 for an Ethernet connection is assigned as non-trusted hardware resource. Further, some hardware resources, like the memory 5, may have a portion assigned as trusted hardware resource and a portion assigned as non-trusted hardware resource.

According to an embodiment, upon startup, a trusted firmware partitions the ECU 1, in particular the memory 5, into a trusted hardware resources and non-trusted hardware resource. The trusted hardware resources are adapted to host a trusted execution environment or a trusted system. According to an embodiment, the trusted system and the non-trusted system 24 share the same processor 3 and the same memory 5.

Figure 2 shows an example of the ECU 1 or the processor 3 comprising a trusted system 22 and a non-trusted system 24. The processor or the control unit 1 is adapted to switch between the trusted system 22 and the non-trusted system 24. For that purpose, a system monitor 26 is provided, which is adapted to switch from the trusted system 22 to the non-trusted system 24 and vice versa. Switching between from the non-trusted system 24 to the trusted system 22 means that all required registers of the non-trusted system 24 are stored and the respective registers of the trusted system 22 are loaded and executed and vice versa. In the present context all required registers means that all registers that are used by both the trusted system 22 and the non-trusted system 24 are stored and the respective registers of the respective other system 22, 24 are loaded when switching. Typically, registers are associated with privilege levels or exception levels ELx, as shown in Figure 2, where x is an integer, where each privilege level (or exception level) (EL) having also access to all register associated with less privileged exception levels. For example for the system shown in Figure 2, if a switching is triggered by the system monitor 26, which is implemented in privilege level EL3, the system monitor 26, saves and restores, respectively, all registers associated with privilege level EL0 and privilege level EL1. As privilege level EL2 is not available in the trusted system 22, the registers of privilege level EL2 are neither accessible nor effective for the trusted system 22, so they can be left in place during a switch from the non-trusted system 24 to the trusted system 22 and/or the execution of the trusted system 22.

The system monitor 26 enforces that the non-trusted system 24, in particular programs or program modules executed in the non-trusted system 24, cannot access or inhibit access hardware and software resources of the trusted system 22. For example, the system monitor 26 enforces that the non-trusted system 24, in particular programs or program modules executed in the non-trusted system 24, cannot access memory areas of the trusted system 22. According to embodiments, the system monitor 26 allows the trusted system 22, in particular modules or program modules executed in the trusted system 22, to access hardware and software resources of the non-trusted system 24, for example the hardware controller 11 or one or more respective areas of the at least one memory 5. In other words, the system monitor 26 cannot enforce limitations for software executed in the trusted system 22, even if this software runs at a lower privilege level or exception level. In other words, the system monitor 26 only trusts software executed in the privilege level EL1 of the trusted system 22, and, in particular, not programs running at a lower privilege level compared to the privilege level EL1, for example running at privilege level EL0.

Further, the system monitor 26 is responsible for switching between the trusted system 22 and the non-trusted system 24, in particular in case of events. For example, in case an interrupt is received for the trusted system 22, and the non-trusted system 24 is currently executed on the at least one processor, the system monitor 26 is adapted to switch to the trusted system 22. If the system 22, 24 or a module is currently executed on the at least one processor, the system is also called to be active in the present invention.

According to some embodiments, the processor 3 includes a generic interrupt controller 28. The generic interrupt controller 28 receives all interrupts from external sources, for example from the controllers 9, 11 and 13. In other words, the generic interrupt controller 28 is responsible for both the trusted system 22 and the non-trusted system 24. The generic interrupt controller 28 is adapted to route the received interrupts to the respective system 22, 24. In detail, in an embodiment, if the non-trusted system 24 is active, interrupts for the non-trusted system are routed to privilege level EL2 of the non-trusted system, for example to a virtualization system 36, and interrupts for the trusted system 22 are routed to privilege level EL3, i.e. the system monitor 26. The system monitor 26 is adapted to switch into the trusted system 22 upon the arrival of an interrupt for the trusted system 22. If the trusted system 22 is active, all interrupts are routed to privilege level EL1 of the trusted system 22, in particular to a safety module 30 as explained later. The safety module 30 may then either voluntarily switch back to the trusted system 24 or continue with its computation.

The trusted system 22 forms a trusted execution environment, wherein each module or program module of the trusted system 22 is loaded via a chain of trust. In a chain of trust, each layer verifies before loading a signature or another security key of the next higher layer, for example by verifying it with a signature or another key stored in at least one dedicated trusted memory, e.g. using a public key or asymmetric cryptography. At a first stage, the bootloader is certified and compared by the processor with a signature or another key stored in a trusted memory.

According to embodiments, the trusted system 22 and the non-trusted system 24 have a plurality of privilege levels. For example, the non-trusted system 24 has three privilege levels or exception levels EL0, EL1, EL2 and the trusted system 22 has two privilege levels, in Figure 2 privilege levels EL0 and EL1. The systems 22, 24 may also have different number of privilege levels.

The privilege levels may be denominated EL0, EL1, EL2, EL3. Each privilege level has different access to the resources of the control unit 1, in particular the processor and/or the memory. The privilege level EL3, where the system monitor 26 is executed, is treated special, as it is used to securely transition between the trusted system 22 and the non-trusted system 24. In particular, only the programs running in the privilege level EL3, here the system monitor 26, are allowed to change a configuration register indicating that the system is operating in the trusted system 22. In some embodiments, the privilege level EL3 is considered to be trusted, in particular regardless the setting of this control register.

For example, the exception level EL0 is the least privileged level, whereas the exception level EL3 is the most privileged level. Each privilege level has from the lowest privilege level to the highest privilege level an increased access to the resources of the control unit 1, in particular the processor 3 and/or the memory 5. In other words, the highest privilege level has the most extensive access to the resources of the control unit 1.

In some embodiments, in particular in the non-trusted system 24, the exception level EL0 is the application level, the exception level EL1 is the operating system level, the exception level EL2 is the virtualization system (for example a hypervisor) level, and the level EL3 is level for the monitoring system 26, monitoring the first state and the second state and enabling to toggle or to switch between the trusted system 22 and the non-trusted system 24. According to some embodiments, the trusted system 22 and the non-trusted system 24 may have a different numbers of privilege levels. For example, the trusted system 22 may have not the exception level EL2.

The trusted system 22 includes a safety module 30 and at least one trusted module 32, 34. The at least one trusted module is a trusted program module. According to embodiments, the trusted modules 32, 34 include at least one trusted operating system 32 running on the safety module 30, and one or more applications 34 running on the trusted operating system 32. According to embodiments, the safety module 30 is adapted to provide the trusted operating system 32 with at least one of the the following abilities regarding an application 34: manage the virtual address space, transfer control into and out of the application 34, and access memory attached to the application's address space.

The safety module 30 is, like the trusted modules 32, 34, loaded via a chain of trust.

The safety module 30 is running on a higher privilege level than the other trusted modules 32, 34 of the trusted system 22, in particular the at least one trusted operating system 32 and the trusted applications 34. For example, the safety module 30 is running on the operating system level (privilege level EL1) and the at least one trusted operating system 32 as well as the at least trusted application 34 are running on the same privilege lever, that is the application level (privilege level EL0).

In some embodiments, the safety module 30 is adapted to grant the trusted operating system 32 the ability to process interrupts and manage critical components (timer, interrupt controller). The safety module 30 enforces that only permitted memory becomes accessible to the trusted modules 32, 34. According to embodiments, the safety module 30 is adapted to that the arrival of interrupts for the non-trusted system 24 leads to a prompt world switch to the non-trusted system 24.

According to embodiments, an interface implemented by the safety module 30 minimizes the effort needed to adapt an existing trusted operating system, which is designed to run in trusted privilege level EL1 to a trusted operating system 32 adapted to run in the privilege level EL0 of the trusted system 22.

The at least one processor 3 further includes at least one page table (not shown). The at least one page table stores a mapping between virtual addresses and physical addresses. For example, the virtual addresses are used by the accessing applications and the physical addresses are used by the hardware. Not each privilege level has the control about the at least one page table. For, example, in some embodiments only the operating system level, the second lowest privilege level, and higher privilege levels may control the at least one page table, in particular are allowed to modify or write into the page table, for example to update the virtual address space associated with a process. A virtual address space includes a plurality of virtual addresses.

According to embodiments, in the trusted system 22, trusted modules 32, 34 running in privilege level EL0 is subject to a page table controlled by modules running in privilege level EL1. In some embodiments, privilege level EL1 itself is not contained through a page table as the memory accesses of modules running in privilege level EL1, for example the safety module 30, are translated and may also have direct access to the control registers and can disable them. In other words, a module running in privilege level EL1 of the trusted system 22 has access to all memory. In other words modules running in privilege level EL1 cannot be safely isolated by the monitoring system 26 running in the privilege level EL3. In that regard, it is as powerful as modules running in privilege level EL3, like the system monitor 26.

From a security point of view, in the non-trusted system 24 the translated physical address is itself subject to the secure partitioning.

The safety module 30 is adapted to assign hardware resources, in particular processor time and memory space, to the at least one trusted operating system 32 and/or provides simulated hardware to the at least one trusted operating system 32. Further, the safety module 30 may control the page tables, whereas the trusted operating system 32 cannot control the page tables. When the trusted operating system 32 wants to change the virtual address space of either itself or the trusted applications 34 it cannot manipulate the at least one page table directly. Instead, it issues a request to the safety module 30, which checks if the request is valid; that is, the safety module 30 grants access to allocated physical memory only if the request is valid. If the request is valid, that means access is granted, in an embodiment, the safety module 30 updates accordingly the at least one page table it maintains on behalf of the trusted operating system 32.

The safety module 30 is further adapted to control the access to the hardware resources, in particular the processor and the memory, the at least one trusted operating system 32 and the at least one trusted application 34 running in a privilege level below the safety module 30. For example, the safety system 30 may inhibit the at least one trusted operating system 32 and the at least one application 34 to access specific, predefined areas of the memory 5, as it will be explained with respect to Figure 3.

The safety module 30 is developed according to the safety standards, in particular IEC 61508, ISO 26262, ISO 13482, EN5012x and/or IEC 62061. For example ISO 26262 is a standard of the international organization for standardization, in particular the version published in 2011 and 2012. This standard defines for example safety requirements in the scope of the vehicle, safety analysis in the scope of the device to be performed before the development starts, safety requirements in the scope of the device, derived from the safety analysis, the development process: conforming to (A)SPICE standard, the tests (quality and quantity), the process documentation and provisions of a safety manual (which tells how to use a product in order to support safety properties). ISO 26262 defines several Automotive Safety Integrity Levels (ASIL), from ASIL A (lowest integrity requirement) to ASIL D (highest integrity requirement).

The at least one trusted modules 32, 34, in particular the at least one trusted operating system 32 and the at least one trusted applications 34, the system monitor 26, and the safety module 30 are created according to security rules. For example, this is achieved by placing these applications in the trusted system 22. In general, a secure execution environment or a trusted system 22 allows a function/software module to operate as expected in terms of security objectives that means for example confidentiality, integrity and/or availability. As stated above, safety and security have different objectives: for a safe system, disclosure of data is acceptable as long as a safety function (for example machine control and the like) is provided. Suspending that safety function is not acceptable. Conversely, for a secure system, it is totally acceptable if the system stops working as long as no secure information is revealed.

According to embodiments, the at least one trusted module 32, 34, in particular the at least one trusted operating system and/or the at least one trusted application 34 are not qualified for safety, in particular they are not programmed according to the safety requirements, as explained here-above.

The non-trusted system 24 includes at least one non-trusted module, in particular a virtualization system 36, a first virtual machine 38 and a second virtual machine 40. The number of virtual machines may be less or more. In other embodiments, the non-trusted system does not include a virtualization system 36. The at least one non-trusted module is a non-trusted program module.

The virtualization system 36 is for example a hypervisor and is provided in the privilege level EL2. The virtualization system 36 is adapted to assign hardware resources like processor time and memory to the respective virtual machines 38 and 40. Further, the virtualization system 36 is adapted to schedule the virtual machines 38 and 40 according to the defined needs. The virtual machines 38 and 40 typically include an operating system and applications running on the operating system. According to an embodiment, the virtualization system 36 can inhibit access of the virtual machines 38, 40 to predefined memory areas.

According to an embodiment, at least a portion, in particular all, of the non-trusted modules is safety qualified as defined above. For example, the virtualization system 36 and the virtual machine 40 is safety qualified. These modules may be also called safety qualified modules. In other words, at least a portion, in particular all, of the non-trusted modules, in the present example the virtualization system 36 and the virtual machine 40 are programmed according to safety standards. For example, the virtual machine 40 may include safety critical applications for an automotive vehicle.

Figure 3 shows schematically a portion of the memory 5. The memory 5 includes a first portion 42 of the memory, which is assigned to the trusted system 22, and a second portion 44, which is assigned to the non-trusted system 24.

The first portion 42 includes a first area 46 used by the system monitor 26, a second area 48 used by the safety module 30, a third area 50 used by the trusted operating system 32, and respectively a fourth area 52, 54 used by the trusted applications 34.

The second portion 44 includes a first area 56 used by the virtualization system 36, a second area 58 used by the first virtual machine 38 and a third area 60 used by the second virtual machine 40.

As already described above, the system monitor 26 controls the access of the non-trusted system 24, in particular the non-trusted modules, for example the virtualization layer 36, the virtual machines 38, 40 to the first portion 42 of the memory 5. For example, the system monitor 26 inhibits the access of the non-trusted modules, for example the virtualization layer 36 and the virtual machines 38, 40 to the first portion 42 of the memory 5. In other words, the system monitor 26 controls the access of code running in the non-trusted system 24 to the first memory portion 42 and, in particular inhibits access to the first memory portion 42. For example, in an embodiment, just a single operating system is running in the non-trusted system 24. Then, the system monitor 26 controls the access of this operating system to the first memory portion 42 and, in particular inhibits access to the first memory portion 42.

The virtualization layer 36 inhibits or controls that the virtual machines 38 and 40 may access the first area 56 of the second portion 44.

The system monitor 26 and the safety module 30 have access to all areas of the memory 5, in particular to the first portion 42 and the second portion 44.

According to an embodiment, the trusted operating system 32 inhibits or controls that the trusted applications 34 may access the third area 50 of the first portion 42. Further, the trusted operating system 32 controls that the trusted applications 34 does not disturb each other by accessing their respective areas 52, 54.

The safety module 30 enforces the safety rules. In other words, the safety module 30 controls the access of the trusted modules 32, 34, in particular of the at least one operating system 32 and the at least one trusted application 34 to the second memory portion 44 and to the first area 46 and second area 48 of the first memory portion 42. For example, the safety module 30 controls the access or inhibits the access to memory areas of safety qualified modules of the non-trusted system 24 in the second memory portion 44.

In a concrete example, in case the virtualization layer 36 and the second virtual machine 40 are safety qualified, the safety module 30 controls or inhibits the trusted applications 34 and the trusted operating system 32 to access the areas 56 assigned to the virtualization system 36 and the area 60 assigned to the second virtual machine of the second memory portion 44.

According to embodiments, the modules running in a specific privilege level control the memory access of the modules running in a lower privilege level. However, in an exception from this rule, in some embodiments modules in privilege level of the safety module 30 in the trusted system 22, here privilege level EL1, cannot be controlled by the modules, for example the system monitor 26, of the highest privilege level, here privilege level EL3.

The control functions by the system monitor 26, the virtualization layer 36 and the safety module 30 which are explained with respect to the memory 5 are also applicable to other resources on the control unit 1, for example controller 9 or 11 and the interface 13. In other words, the safety module 30 may control access of the trusted modules 32, 34 to resources of the control unit 1 assigned safety qualified modules of the non-trusted system 24.

According to embodiments, the safety module 30 is adapted to encapsulate the trusted operating system 32 and the trusted applications 34. Thus, the control unit 1 is not only qualified for security but can also be used for safety purposes. In particular the trusted system 22 may use paravirtualization techniques for spatial isolation in order to deprivilege the trusted operating system into the privilege level for applications (EL0). Thus, the safety module 30 controls the page table.

As already explained above, the system includes a generic interrupt controller 28. According to an embodiment, the generic interrupt controller 28 is configured, to route all received interrupts, also from non-trusted resources or for the non-trusted system 24, to the trusted system 22, in particular to the safety module 30, in case the trusted system 22 is active. The interrupts for the non-trusted system 24 may include safety critical interrupts and non-safety critical interrupts. If the non-trusted system 24 is active, the generic interrupt controller 28 is configured, to route non-trusted interrupts or interrupts for the non-trusted system 24 to the virtualization system 36 of the non-trusted system 24 in privilege level EL2 or to directly to the operating system if no virtualization layer 36 is used, whereas trusted interrupts or interrupts for the trusted system 22 are routed to the system monitor 26 in the highest privilege level EL3, which then switches to the trusted system 22.

According to some embodiments, the safety module 30 examines the interrupt, and in case of a safety critical event, it injects the interrupt immediately to the non-trusted system 24 and commands the system monitor 26 to switch to the non-trusted system 24.

In another embodiment, which may be combined with other embodiments disclosed herein, when the trusted system 22 is active, the safety module 30, periodically check the generic interrupt controller 28 for interrupts for the non-trusted system 24, in particular safety critical interrupts. For example, the safety module 30 set a periodically triggering trusted timer. Whenever the trusted timer expires, the safety module 30 is adapted to check the generic interrupt controller 28 for non-trusted interrupts or interrupts for the-non trusted system 24. According to an embodiment, a trusted timer is needed to get the control flow back from the trusted modules 32, 34 to the safety module 30 in a predictable manner. In case a safety critical event or interrupt is received, the safety module 30 is adapted to inject the interrupt to the non-trusted system 24 as described in some embodiments disclosed herein and/or to command the system monitor 26 to switch to the non-trusted system 24.

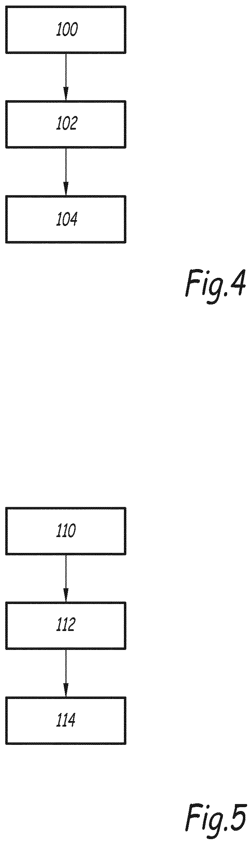

Figure 4 shows a flow chart of an embodiment according to the invention.

In step 100 the safety module 30 receives a request, for example from the trusted operating system 32, to access an area of the second portion 44 of the memory, for example by receiving a request to update the virtual address space in the page table for the trusted operating system 32 or a trusted application 34 for addresses in an area of the second portion 44 of the memory.

In step 102, the safety module 30, determines whether the area of the second portion 44 of the memory includes a predefined area to be controlled from access by the at least one trusted module 32, 34, for example in case the area is used by a safety qualified module, in the above example the areas 56 and 60.

In step 104, the safety module 30 controls access to the area of the second portion 44 of the meory in case the area includes the predefined area to be inhibited from access by a trusted module, for example by not updating the page table in case the area to be updated for the trusted modules 32, 34 includes the predefined area to be inhibited from access by a trusted module 32, 34. Otherwise, the safety module 30 updates the page table.

Figure 5 shows another flow chart for operating a control unit. In step 110 the generic interrupt controller 28 receives an interrupt for the non-trusted system 24, in particular for a safety qualified module 40, in particular in case the trusted system 22 is active, for example that one of the trusted modules 32, 34 or the safety module 30 is currently executed on the at least one processor 3.

In step 112, the generic interrupt controller 28 forwards or provides the received interrupt for the non-trusted system 24, to the trusted system 22, in particular to the safety module 30.

In step 114, the safety module 30 examines, whether the received interrupt for the non-trusted system 24 is for a safety qualified module 36, 40 of the non-trusted system. In case the interrupt is for a safety qualified module of the non-trusted system 24, the safety module 30 injects the interrupt to the non-trusted system and commanding the system monitor 26 to switch to the non-trusted system 24. For example, in an embodiment, the interrupt for the non-trusted system 24 is delivered to safety module 30 in privilege level EL1 of the trusted system 22, where state of the safety module 30 is changed to « active » (= work in progress) by reading a control register. The safety module 30 examines the interrupt for the non-trusted system 24 and decides that the system has to switch to the non-trusted system 24. The safety module 30 writes, via the interrupt controller 28, into a status register of the interrupt that the interrupt is to be injected back to « ready for delivery » and commands the system monitor 26 to switch to the non-trusted system 24. As soon as execution is resumed by the non-trusted system 24, the interrupt controller 28 reissues the interrupt to the virtualization system 36 or directly to an operating system if no virtualization system is used, which may than switch to the virtual machine 38, 40 responsible for handling the interrupt, here for example the safety qualified virtual machine 40.

According to the invention, a complete redevelopment of secure or trusted functions according to a safety standard is not necessary. Further, the isolation between safety and security functions is enforced. The security properties of a trusted execution environment are retained. Embodiments of the present disclosure enable the reuse of existing secure environments and to be certified for safety applications.

## Claims

1. Control unit (1) comprising a processor (3) and a memory (5) connected to the processor the processor comprising a first state and a second state and being adapted to switch between the first state and the second state, wherein in the first state a non-trusted system (24) is active and in the second state a trusted system (22) is active, wherein the processor (3) includes a plurality of privilege levels, wherein each privilege level has from the lowest privilege level to the highest privilege level an increased access to the processor and/or the memory, wherein the control unit comprises a system monitor (26) controlling the activation of the first state and the second state, wherein the system monitor (26) is in the highest privilege level (EL3),
the memory (5) including a first portion (42) assigned to the trusted system (22) and a second portion (44) assigned to the non-trusted system (24), wherein the system monitor (26) is adapted to inhibit the access of the non-trusted system (24) to the first portion (42) of the memory (5), wherein the trusted system (22) includes a safety module (30) and at least one trusted module (32, 34), the at least one trusted module (32, 34) being loaded in a chain of trust and running on the safety module (30), wherein the safety module (30) is running in a privilege level below the highest privilege level, wherein the safety module (30) being adapted to control access of the at least one trusted module to a predefined area (56, 60) of the second portion (44) of the memory, wherein the predefined area (56, 60) is assigned to a safety qualified module (36, 40) provided in the non-trusted system (24), wherein the safety module (30) is a safety qualified module.

2. Control unit according to claim 1, wherein the trusted module includes at least one trusted operating system (32) and at least one application (34) running on the at least one trusted operating system (32), wherein the safety module (30) being adapted to control, in particular inhibit, access of the at least one trusted operating system (32) and/or the at least one application (34) to the predefined area (56, 60) of the second portion (44) of the memory (5).

3. Control unit according to claim 2, wherein the at least one trusted operating system (32) being on the same privilege level (EL0) as the at least one application (34) running on the trusted operating system, wherein in particular the at least one trusted operating system (32) being provided at the lowest privilege level.

4. Control unit according to one of the preceding claims, wherein the safety module (30) controls the page table of the trusted system (22) associated to the at least one trusted module (32, 34).

5. Control unit according to one of the preceding claims, wherein the at least one trusted module (32, 34) being on a lower privilege level compared to the safety module.

6. Control unit according to one of the preceding claims, wherein the processor includes a generic interrupt controller (28) receiving all interrupts from external sources (9, 11, 13), wherein, when the trusted system being active, the generic interrupt controller being configured to route all interrupts for the non-trusted system (24) to the trusted system (22), in particular to the safety module (30) of the trusted system.

7. Control unit according to claim 6, wherein the safety module is adapted to examine whether the received interrupt for the non-trusted system (24) is for a safety qualified module (36, 40) of the non-trusted system, and in case the interrupt is for a safety qualified module of the non-trusted system (24), the safety module (30) is adapted to program that the interrupt is injected to the non-trusted system and to command to system monitor (26) to switch to the non-trusted system (24).

8. Control unit according to one of the preceding claims, wherein the processor includes a generic interrupt controller (28) receiving all interrupts from external sources (9, 11, 13), wherein the safety module (30) is adapted periodically check the generic interrupt controller for interrupts addressed to the non-trusted system (24) and retrieve these interrupts in order to examine whether the received interrupt for the non-trusted system (24) is for a safety qualified module (36, 40) of the non-trusted system, and in case the interrupt is for a safety qualified module of the non-trusted system (24), to program that the interrupt is injected to the non-trusted system and to command to system monitor (26) to switch to the non-trusted system (24).

9. Control unit according to one of the preceding claims, wherein the safety module (30) is adapted to assign hardware resources, in particular processor time and memory space, to the at least one trusted module (32, 34) and/or provides simulated hardware to the at least one trusted module (32, 34).

10. Method for operating a control unit, wherein the control unit (1) includes a processor (3) and a memory (5) connected to the processor the processor comprising a first state and a second state and being adapted to switch between the first state and the second state, wherein in the first state a non-trusted system (24) is active and in the second state a trusted system (22) is active, wherein the processor (3) includes a plurality of privilege levels, wherein each privilege level has from the lowest privilege level to the highest privilege level an increased access to the processor and/or the memory, wherein the control unit comprises a system monitor (26) controlling the activation of the first state and the second state, wherein the system monitor (26) is in the highest privilege level (EL3), the memory (5) including a first portion (42) assigned to the trusted system (22) and a second portion (44) assigned to the non-trusted system (24), wherein the system monitor (26) is adapted to control the access of the non-trusted system (24) to the first portion (42) of the memory (5), wherein the trusted system (22) includes a safety module (30) and at least one trusted module (32, 34), wherein the safety module (30) is in running in a privilege level below the highest privilege level, the at least one trusted module (32, 34) being loaded in a chain of trust and running on the safety module (30), wherein the safety module (30) is a safety qualified module, the method comprising:
- receiving, by the safety module (30), a request to access an area of the second portion (44) of the memory (5);
- determining, by the safety module (30), whether the area of the second portion of the memory includes a predefined area to be controlled from access by the at least one trusted module (32, 34), wherein the predefined area (56, 60) is assigned to a safety qualified module (36, 40) provided in the non-trusted system (24); and
- controlling access to the area of the second portion (44) of the memory in case the area includes the predefined area to be inhibited.

11. Method according to claim 10, wherein the processor includes a generic interrupt controller receiving all interrupts from external sources, the method further comprising: receiving an interrupt, by the generic interrupt controller (28), for the non-trusted system (24);
providing, when the trusted system (22) is active, the received interrupt for the non-trusted system (24), to the trusted system (22), in particular to the safety module (30);
examining, by the safety module (30), whether the received interrupt for the non-trusted system (24) is for a safety qualified module (36, 40) of the non-trusted system;
programming, in case the interrupt is for a safety qualified module of the non-trusted system (24), that the interrupt is injected to the non-trusted system; and
commanding the system monitor (26) to switch to the non-trusted system (24).

12. Computer program product comprising commands for executing the method according to any one of the preceding claims 10 or 11, when loaded and executed on a processor.

13. Non-volatile memory including a program containing commands for executing the method according one of the claims 10 or 11, when loaded and executed on a processor.

## Patentansprüche

1. Steuereinheit (1), umfassend einen Prozessor (3) und einen mit dem Prozessor verbundenen Speicher (5), der Prozessor umfassend einen ersten Zustand und einen zweiten Zustand und der angepasst ist, um zwischen dem ersten Zustand und dem zweiten Zustand umzuschalten, wobei in dem ersten Zustand ein nicht vertrauenswürdiges System (24) aktiv ist und in dem zweiten Zustand ein vertrauenswürdiges System (22) aktiv ist, wobei der Prozessor (3) eine Vielzahl von Privilegstufen beinhaltet, wobei jede Privilegstufe von der niedrigsten Privilegstufe bis zu der höchsten Privilegstufe einen erhöhten Zugriff auf den Prozessor und/oder den Speicher aufweist, wobei die Steuereinheit eine Systemüberwachung (26) umfasst, die die Aktivierung des ersten Zustands und des zweiten Zustands steuert, wobei die Systemüberwachung (26) in der höchsten Privilegstufe (EL3) ist,
wobei der Speicher (5) einen ersten Abschnitt (42), der dem vertrauenswürdigen System (22) zugewiesen ist, und einen zweiten Abschnitt (44), der dem nicht vertrauenswürdigen System (24) zugewiesen ist, beinhaltet, wobei die Systemüberwachung (26) angepasst ist, um den Zugriff des nicht vertrauenswürdigen Systems (24) auf den ersten Abschnitt (42) des Speichers (5) zu sperren, wobei das vertrauenswürdige System (22) ein Sicherheitsmodul (30) und mindestens ein vertrauenswürdiges Modul (32, 34) beinhaltet, wobei das mindestens eine vertrauenswürdige Modul (32, 34) in einer Vertrauenskette geladen ist und auf dem Sicherheitsmodul (30) läuft, wobei das Sicherheitsmodul (30) in einer Privilegstufe unterhalb der höchsten Privilegstufe läuft, wobei das Sicherheitsmodul (30) angepasst ist, um einen Zugriff des mindestens einen vertrauenswürdigen Moduls auf einen vordefinierten Bereich (56, 60) des zweiten Abschnitts (44) des Speichers zu steuern, wobei der vordefinierte Bereich (56, 60) einem sicherheitsqualifizierten Modul (36, 40) zugeordnet ist, das in dem nicht vertrauenswürdigen System (24) bereitgestellt ist, wobei das Sicherheitsmodul (30) ein sicherheitsqualifiziertes Modul ist.

2. Steuergerät nach Anspruch 1, wobei das vertrauenswürdige Modul mindestens ein vertrauenswürdiges Betriebssystem (32) und mindestens eine auf dem mindestens einen vertrauenswürdigen Betriebssystem (32) laufende Anwendung (34) beinhaltet, wobei das Sicherheitsmodul (30) angepasst ist, um einen Zugriff des mindestens einen vertrauenswürdigen Betriebssystems (32) und/oder der mindestens einen Anwendung (34) auf den vordefinierten Bereich (56, 60) des zweiten Abschnitts (44) des Speichers (5) zu steuern, insbesondere zu sperren.

3. Steuereinheit nach Anspruch 2, wobei das mindestens eine vertrauenswürdige Betriebssystem (32) auf der gleichen Privilegstufe (EL0) wie die mindestens eine auf dem vertrauenswürdigen Betriebssystem laufende Anwendung (34) ist, wobei insbesondere das mindestens eine vertrauenswürdige Betriebssystem (32) auf der niedrigsten Privilegstufe bereitgestellt ist.

4. Steuergerät nach einem der vorherigen Ansprüche, wobei das Sicherheitsmodul (30) die Seitentabelle des vertrauenswürdigen Systems (22) steuert, das dem mindestens einen vertrauenswürdigen Modul (32, 34) zugeordnet ist.

5. Steuergerät nach einem der vorherigen Ansprüche, wobei das mindestens eine vertrauenswürdige Modul (32, 34) auf einer niedrigeren Privilegstufe ist als das Sicherheitsmodul.

6. Steuereinheit nach einem der vorherigen Ansprüche, wobei der Prozessor eine generische Interrupt-Steuerung (28) beinhaltet, die alle Interrupts von externen Quellen (9, 11, 13) empfängt, wobei, wenn das vertrauenswürdige System aktiv ist, der generische Interrupt-Controller konfiguriert ist, um alle Interrupts für das nicht vertrauenswürdige System (24) an das vertrauenswürdige System (22), insbesondere an das Sicherheitsmodul (30) des vertrauenswürdigen Systems, zu leiten.

7. Steuereinheit nach Anspruch 6, wobei das Sicherheitsmodul angepasst ist, um zu untersuchen, ob der empfangene Interrupt für das nicht vertrauenswürdige System (24) für ein sicherheitsqualifiziertes Modul (36, 40) des nicht vertrauenswürdigen Systems ist, und wenn der Interrupt für ein sicherheitsqualifiziertes Modul des nicht vertrauenswürdigen Systems (24) ist, das Sicherheitsmodul (30) angepasst ist, um zu programmieren, dass der Interrupt in das nicht vertrauenswürdige System eingespeist wird, und um der Systemüberwachung (26) zu befehlen, auf das nicht vertrauenswürdige System (24) umzuschalten.

8. Steuereinheit nach einem der vorherigen Ansprüche, wobei der Prozessor eine generische Interrupt-Steuerung (28) beinhaltet, die alle Interrupts von externen Quellen (9, 11, 13) empfängt, wobei das Sicherheitsmodul (30) angepasst ist, die generische Interrupt-Steuerung periodisch auf Interrupts zu überprüfen, die an das nicht vertrauenswürdige System (24) adressiert sind, und diese Interrupts abzurufen, um zu untersuchen, ob der empfangene Interrupt für das nicht vertrauenswürdige System (24) für ein sicherheitsqualifiziertes Modul (36, 40) des nicht vertrauenswürdigen Systems ist, und wenn der Interrupt für ein sicherheitsqualifiziertes Modul des nicht vertrauenswürdigen Systems (24) ist, zu programmieren, dass der Interrupt in das nicht vertrauenswürdige System eingespeist wird, und der Systemüberwachung (26) zu befehlen, auf das nicht vertrauenswürdige System (24) umzuschalten.

9. Steuereinheit nach einem der vorherigen Ansprüche, wobei das Sicherheitsmodul (30) angepasst ist, um dem mindestens einen vertrauenswürdigen Modul (32, 34) Hardware-Ressourcen, insbesondere Prozessorzeit und Speicherplatz, zuzuweisen und/oder dem mindestens einen vertrauenswürdigen Modul (32,34) simulierte Hardware bereitzustellen.

10. Verfahren zum Betreiben einer Steuereinheit, die Steuereinheit (1) umfassend einen Prozessor (3) und einen mit dem Prozessor verbundenen Speicher (5), der Prozessor umfassend einen ersten Zustand und einen zweiten Zustand und der angepasst ist, um zwischen dem ersten Zustand und dem zweiten Zustand umzuschalten, wobei in dem ersten Zustand ein nicht vertrauenswürdiges System (24) aktiv ist und in dem zweiten Zustand ein vertrauenswürdiges System (22) aktiv ist, wobei der Prozessor (3) eine Vielzahl von Privilegstufen beinhaltet, wobei jede Privilegstufe von der niedrigsten Privilegstufe bis zu der höchsten Privilegstufe einen erhöhten Zugriff auf den Prozessor und/oder den Speicher aufweist, wobei die Steuereinheit eine Systemüberwachung (26) umfasst, die die Aktivierung des ersten Zustands und des zweiten Zustands steuert, wobei die Systemüberwachung (26) in der höchsten Privilegstufe (EL3) ist, wobei der Speicher (5) einen ersten Abschnitt (42), der dem vertrauenswürdigen System (22) zugeordnet ist, und einen zweiten Abschnitt (44), der dem nicht vertrauenswürdigen System (24) zugeordnet ist, enthält, wobei die Systemüberwachung (26) angepasst ist, um den Zugriff des nicht vertrauenswürdigen Systems (24) auf den ersten Abschnitt (42) des Speichers (5) zu steuern, wobei das vertrauenswürdige System (22) ein Sicherheitsmodul (30) und mindestens ein vertrauenswürdiges Modul (32, 34) beinhaltet, wobei das Sicherheitsmodul (30) in einer Privilegstufe unterhalb der höchsten Privilegstufe läuft, wobei das mindestens eine vertrauenswürdige Modul (32, 34) in eine Vertrauenskette geladen ist und auf dem Sicherheitsmodul (30) läuft, wobei das Sicherheitsmodul (30) ein sicherheitsqualifiziertes Modul ist, das Verfahren umfassend:
- Empfangen, durch das Sicherheitsmodul (30), einer Anforderung zum Zugreifen auf einen Bereich des zweiten Abschnitts (44) des Speichers (5);
- Bestimmen, durch das Sicherheitsmodul (30), ob der Bereich des zweiten Abschnitts des Speichers einen vordefinierten Bereich beinhaltet, der vor dem Zugriff durch das mindestens eine vertrauenswürdige Modul (32, 34) zu schützen ist, wobei der vordefinierte Bereich (56, 60) einem sicherheitsqualifizierten Modul (36, 40) zugeordnet ist, das in dem nicht vertrauenswürdigen System (24) bereitgestellt ist; und
- Steuern eines Zugriffs auf den Bereich des zweiten Abschnitts (44) des Speichers, wenn der Bereich den vordefinierten Bereich beinhaltet, der gesperrt werden soll.

11. Verfahren nach Anspruch 10, wobei der Prozessor eine generische Interrupt-Steuerung enthält, die alle Interrupts von externen Quellen empfängt, das Verfahren ferner umfassend: Empfangen eines Interrupts durch die generische Interrupt-Steuerung (28) für das nicht vertrauenswürdige System (24);
Bereitstellen des empfangenen Interrupts für das nicht vertrauenswürdige System (24) an das vertrauenswürdige System (22), insbesondere an das Sicherheitsmodul (30), wenn das vertrauenswürdige System (22) aktiv ist;
Untersuchen, durch das Sicherheitsmodul (30), ob der empfangene Interrupt für das nicht vertrauenswürdige System (24) für ein sicherheitsqualifiziertes Modul (36, 40) des nicht vertrauenswürdigen Systems ist;
Programmieren, wenn die Unterbrechung für ein sicherheitsqualifiziertes Modul des nicht vertrauenswürdigen Systems (24) ist, dass die Unterbrechung in das nicht vertrauenswürdige System gespeist wird; und
Befehlen der Systemüberwachung (26), auf das nicht vertrauenswürdige System (24) umzuschalten.

12. Computerprogrammprodukt, umfassend Befehle zum Ausführen des Verfahrens nach einem der vorherigen Ansprüche 10 oder 11 enthält, wenn es auf einen Prozessor geladen und ausgeführt wird.

13. Nichtflüchtiger Speicher, der ein Programm beinhaltet, das Befehle zum Ausführen des Verfahrens nach einem der Ansprüche 10 oder 11 enthält, wenn es auf einen Prozessor geladen und ausgeführt wird.

## Revendications

1. Unité de commande (1) comprenant un processeur (3) et une mémoire (5) connectée au processeur, le processeur comprenant un premier état et un second état et étant conçu pour passer du premier état au second état, dans laquelle, dans le premier état, un système non fiable (24) est actif et, dans le second état, un système fiable (22) est actif, dans laquelle le processeur (3) comprend une pluralité de niveaux de privilège, dans laquelle chaque niveau de privilège a, du niveau de privilège le plus bas au niveau de privilège le plus élevé, un meilleur accès au processeur et/ou à la mémoire, l'unité de commande comprenant un dispositif de surveillance de système (26) commandant l'activation du premier état et du second état, dans laquelle le dispositif de surveillance de système (26) est au niveau de privilège le plus élevé (EL3),
la mémoire (5) comprenant une première partie (42) attribuée au système fiable (22) et une seconde partie (44) attribuée au système non fiable (24), dans laquelle le dispositif de surveillance de système (26) est conçu pour bloquer l'accès du système non fiable (24) à la première partie (42) de la mémoire (5), dans laquelle le système fiable (22) comprend un module de sécurité (30) et au moins un module fiable (32, 34), l'au moins un module fiable (32, 34) étant chargé dans une chaîne de confiance et s'exécutant sur le module de sécurité (30), dans laquelle le module de sécurité (30) s'exécute à un niveau de privilège inférieur au niveau de privilège le plus élevé, dans laquelle le module de sécurité (30) est conçu pour contrôler l'accès de l'au moins un module fiable à une zone prédéfinie (56, 60) de la seconde partie (44) de la mémoire, dans laquelle la zone prédéfinie (56, 60) est attribuée à un module qualifié pour la sécurité (36, 40) prévu dans le système non fiable (24), dans laquelle le module de sécurité (30) est un module qualifié pour la sécurité.

2. Unité de commande selon la revendication 1, dans laquelle le module fiable comprend au moins un système d'exploitation de confiance (32) et au moins une application (34) qui s'exécute sur l'au moins un système d'exploitation fiable (32), dans laquelle le module de sécurité (30) est conçu pour contrôler, en particulier bloquer, l'accès de l'au moins un système d'exploitation fiable (32) et/ou de l'au moins une application (34) à la zone prédéfinie (56, 60) de la seconde partie (44) de la mémoire (5).

3. Unité de commande selon la revendication 2, dans laquelle l'au moins un système d'exploitation fiable (32) est au même niveau de privilège (EL0) que l'au moins une application (34) qui s'exécute sur le système d'exploitation fiable, dans laquelle en particulier l'au moins un système d'exploitation fiable (32) est au niveau de privilège le plus bas.

4. Unité de commande selon l'une des revendications précédentes, dans laquelle le module de sécurité (30) commande la table de pages du système fiable (22) associé à l'au moins un module fiable (32, 34).

5. Unité de commande selon l'une des revendications précédentes, dans laquelle l'au moins un module fiable (32, 34) est à un niveau de privilège inférieur par rapport au module de sécurité.

6. Unité de commande selon l'une des revendications précédentes, dans laquelle le processeur comprend un contrôleur d'interruption générique (28) recevant toutes les interruptions provenant de sources extérieures (9, 11, 13), dans laquelle, lorsque le système fiable est actif, le contrôleur d'interruption générique est configuré pour acheminer toutes les interruptions pour le système non fiable (24) vers le système fiable (22), en particulier vers le module de sécurité (30) du système fiable.

7. Unité de commande selon la revendication 6, dans laquelle le module de sécurité est conçu pour examiner si l'interruption reçue pour le système non fiable (24) est destinée ou non à un module qualifié pour la sécurité (36, 40) du système non fiable, et dans le cas où l'interruption est destinée à un module qualifié pour la sécurité du système non fiable (24), le module de sécurité (30) est conçu pour programmer l'injection de l'interruption dans le système non fiable et pour commander au dispositif de surveillance de système (26) de commuter sur le système non fiable ( 24).

8. Unité de commande selon l'une des revendications précédentes, dans laquelle le processeur comprend un contrôleur d'interruption générique (28) recevant toutes les interruptions provenant de sources extérieures (9, 11, 13), dans laquelle le module de sécurité (30) est conçu pour vérifier périodiquement dans le contrôleur d'interruption générique la présence d'interruptions adressées au système non fiable (24) et pour récupérer ces interruptions afin d'examiner si l'interruption reçue pour le système non fiable (24) est destinée ou non à un module qualifié pour la sécurité (36, 40) du système non fiable, et dans le cas où l'interruption est destinée à un module qualifié pour la sécurité du système non fiable (24), pour programmer l'injection de l'interruption dans le système non fiable et pour commander au dispositif de surveillance de système (26) de commuter sur le système non fiable (24).

9. Unité de commande selon l'une des revendications précédentes, dans laquelle le module de sécurité (30) est conçu pour attribuer des ressources matérielles, en particulier un temps de processeur et un espace mémoire, à l'au moins un module fiable (32, 34) et/ou fournit du matériel simulé à l'au moins un module fiable (32, 34).

10. Procédé de fonctionnement d'une unité de commande, dans lequel l'unité de commande (1) comprend un processeur (3) et une mémoire (5) connectée au processeur, le processeur comprenant un premier état et un second état et étant conçu pour passer du premier état au second état, dans lequel, dans le premier état, un système non fiable (24) est actif et, dans le second état, un système fiable (22) est actif, dans lequel le processeur (3) comprend une pluralité de niveaux de privilège, dans lequel chaque niveau de privilège a, du niveau de privilège le plus bas au niveau de privilège le plus élevé, un meilleur accès au processeur et/ou à la mémoire, l'unité de commande comprenant un dispositif de surveillance de système (26) commandant l'activation du premier état et du second état, dans lequel le dispositif de surveillance de système (26) est au niveau de privilège le plus élevé (EL3), la mémoire (5) comprenant une première partie (42) attribuée au système fiable (22) et une seconde partie (44) attribuée au système non fiable (24), dans lequel le dispositif de surveillance de système (26) est conçu pour contrôler l'accès du système non fiable (24) à la première partie (42) de la mémoire (5), dans lequel le système fiable (22) comprend un module de sécurité (30) et au moins un module fiable (32, 34), dans lequel le module de sécurité (30) s'exécute à un niveau de privilège inférieur au niveau de privilège le plus élevé, l'au moins un module fiable (32, 34) étant chargé dans une chaîne de confiance et s'exécutant sur le module de sécurité (30), dans lequel le module de sécurité (30) est un module qualifié pour la sécurité, le procédé comprenant :
- la réception, par le module de sécurité (30), d'une demande pour accéder à une zone de la seconde partie (44) de la mémoire (5) ;
- la détermination, par le module de sécurité (30), du fait que la zone de la seconde partie de la mémoire comprend ou non une zone prédéfinie dont l'accès par l'au moins un module fiable (32, 34) doit être contrôlé, dans lequel la zone prédéfinie (56, 60) est attribuée à un module qualifié pour la sécurité (36, 40) prévu dans le système non fiable (24) ; et
- le contrôle de l'accès à la zone de la seconde partie (44) de la mémoire dans le cas où la zone comprend la zone prédéfinie dont l'accès doit être bloqué.

11. Procédé selon la revendication 10, dans lequel le processeur comprend un contrôleur d'interruption générique recevant toutes les interruptions provenant de sources extérieures, le procédé comprenant en outre : la réception d'une interruption, par le contrôleur d'interruption générique (28), pour le système non fiable (24) ;
la fourniture, lorsque le système fiable (22) est actif, de l'interruption reçue pour le système non fiable (24), au système fiable (22), en particulier au module de sécurité (30) ;
l'examen, par le module de sécurité (30), du fait que l'interruption reçue pour le système non fiable (24) est destinée ou non à un module qualifié pour la sécurité (36, 40) du système non fiable ;
la programmation, dans le cas où l'interruption est destinée à un module qualifié pour la sécurité du système non fiable (24), de l'injection de l'interruption dans le système non fiable ; et
la commande du dispositif de surveillance de système (26) pour commuter sur le système non fiable (24).

12. Produit de programme informatique comprenant des commandes permettant d'exécuter le procédé selon l'une quelconque des revendications précédentes 10 et 11, lorsqu'elles sont chargées et exécutées sur un processeur.

13. Mémoire non volatile comprenant un programme contenant des commandes permettant d'exécuter le procédé selon l'une des revendications 10 et 11, lorsqu'elles sont chargées et exécutées sur un processeur.
